Europäisches Patentamt

European Patent Office

Office européen des brevets

(11) Veröffentlichungsnummer: **0 256 269**

A2

(12) **EUROPÄISCHE PATENTANMELDUNG**

(21) Anmeldenummer: **87109448.8**

(22) Anmeldetag: **01.07.87**

(51) Int. Cl.³: **G 11 B 5/53**

(30) Priorität: **02.08.86 DE 3626307**

(43) Veröffentlichungstag der Anmeldung:
**24.02.88 Patentblatt 88/8**

(84) Benannte Vertragsstaaten:
**AT DE FR GB IT**

(71) Anmelder: **GRUNDIG E.M.V. Elektro-Mechanische Versuchsanstalt Max Grundig holländ. Stiftung & Co. KG. Kurgartenstrasse 37
D-8510 Fürth(DE)**

(72) Erfinder: **Gukkenberger, Horst, Dipl-Ing Grundig E.M.V. Max Grundig holländ Stiftung&Co KG Kurgartenstr.37
D-8510 Fürth/Bay(DE)**

(72) Erfinder: **Eberle, Karl, Dipl-Ing Grundig E.M.V. Max Grundig holländ Stiftung&Co KG Kurgartenstr.37
D-8510 Fürth/Bay(DE)**

(72) Erfinder: **Köpnick, Klaus Jürgen, Dipl-Ing Grundig E.M.V. Max Grundig holländ Stiftung&Co KG Kurgartenstr.37
D-8510 Fürth/Bay(DE)**

(54) Verfahren zur Befestigung eines Video-Magnetkopfes.

(57) Beschrieben ist ein Verfahren zur Befestigung eines Video-Magnetkopfes auf einer Kopfradscheibe, wobei der Magnetkopf aus zwei verbundenen, einen unmagnetischen Arbeitsspalt aufweisenden Kernhälften besteht, und wenigstens eine Kernhälfte eine Spule aufweist. Die verbundenen Kernhälften weisen an mehreren Stellen mit Glaslot gefüllte Ausnehmungen auf. Nach dem Aufsetzen des Magnetkopfes auf eine Kopfradscheibe in einer vorgegebenen Lage wird das Glaslot in den Ausnehmungen angeschmolzen und das abschmelzende Glaslot verbindet den Magnetkopf mit der Kopfradscheibe.

Fig. 1

EP 0 256 269 A2

1

# VERFAHREN ZUR BEFESTIGUNG EINES VIDEO-MAGNETKOPFES

## BESCHREIBUNG

Es ist bekannt, die Video-Magnetköpfe in einem Video-Magnetbandgerät auf eine Montageplatine aufzukleben. Diese Einheit wird über die Montageplatine auf der in der Kopftrommel eines Videogerätes drehbar angeordneten Kopfradscheibe aufgeschraubt bzw. aufgeschweißt oder aufgeklebt. Der Videokopf kann anschließend über die Montageplatine durch Einbringen einer Stellschraube oder durch Verbiegen der Montageplatine justiert werden. Ein derartiger arbeitsintensiver Montage- und Justage-Vorgang zum Aufbringen eines Video-Magnetkopfes auf eine Kopfradscheibe eines Videogerätes ist kostspielig und nachteilig, da eine Veränderung der Kopfjustage durch thermische Beeinflussung der aus unterschiedlichen Materialien gefertigten Teile möglich ist.

2

Aufgabe der Erfindung ist es, eine Befestigungsart
eines Video-Magnetkopfes auf einer Kopfradscheibe eines
Video-Magnetbandgerätes zu schaffen, die gegenüber den
bisher bekannten Ausführungen eine vereinfachte und
verbilligte Montage ermöglicht und gewährleistet, daß
die vorgesehene Lage eines Videokopfes auf einer
Kopfradscheibe auch bei Temperaturschwankungen
gewährleistet bleibt.

Diese Aufgabe wird erfindungsgemäß durch die
kennzeichnenden Merkmale des Patentanspruchs 1 gelöst.

Einzelheiten der Erfindung werden im folgenden anhand
der Zeichnungen erläutert.

Fig. 1      ist eine vergrößerte Draufsicht auf
            einen Video-Magnetkopf, der direkt auf
            einer Kopfradscheibe eines Video-
            Magnetbandgerätes aufgesetzt ist,

Fig. 2      ist eine Frontansicht der Fig. 1 und

Fig. 3      ist eine perspektivische Darstellung
            eines Kernblocks, aus dem die
            verbundenen Kernhälften des Magnetkopfes
            abgetrennt werden.

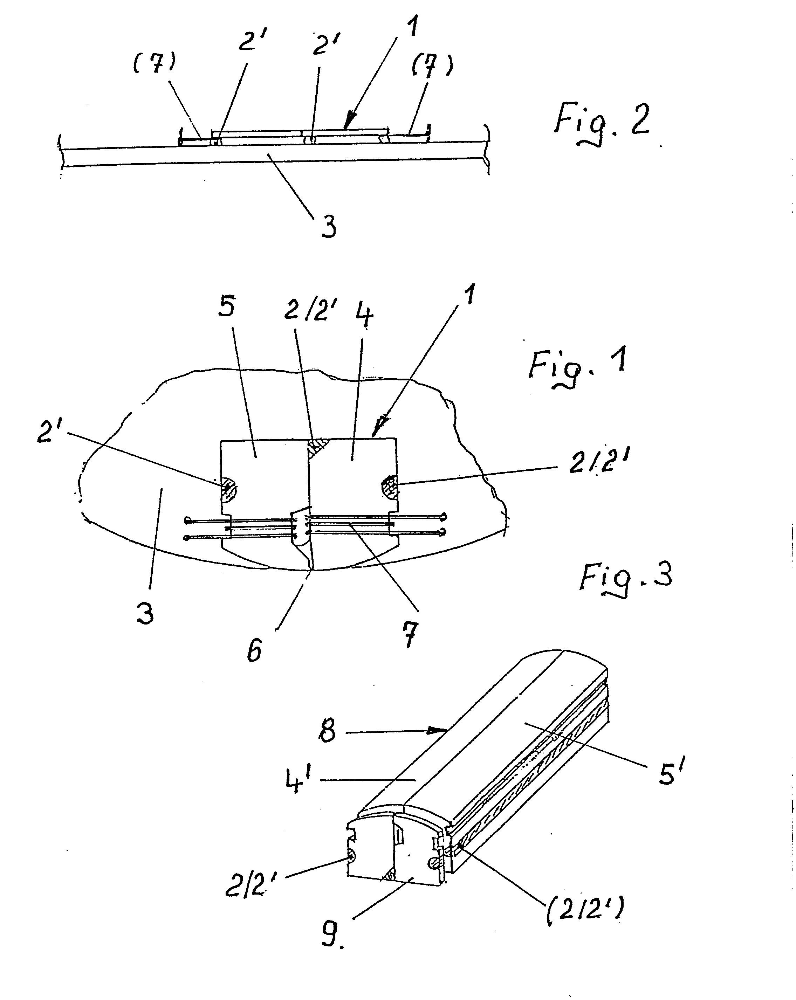

Aus der Figur 1 ist ersichtlich, daß der Video-
Magnetkopf 1 an drei Stellen Ausnehmungen 2 aufweist
über die der Magnetkopf auf einer Kopfradscheibe 3
befestigt ist. In den Ausnehmungen 2 befindet sich
ein eingeschmolzenes Glaslot 2', das erwärmt wird,
und durch teilweises Ausfließen aus den Ausnehmungen
den Magnetkopf 1 mit der Kopfradscheibe 3 verlötet.
Der Video-Magnetkopf 1 besteht im wesentlichen aus
zwei Kernhälften 4 und 5, die z. B. mittels Glaslot
unter Bildung eines unmagnetischen Arbeitsspaltes 6
verbunden sind. Durch Einbringen von Drahtwindungen
in Form einer Spule 7 in eine vorgesehene
Kernöffnung, ist der Magnetkopf funktionsfähig.

Aus der Figur 2 ist die Höhenlage des Magnetkopfes 1
zur Kopfradscheibe 3 zu erkennen. Der gewünschte
Zwischenraum zwischen dem Magnetkopf und der
Kopfradscheibe bildet sich durch teilweises Auslaufen
des Glaslotes 2' aus den Ausnehmungen 2, die sich in
den Kernhälften befinden. Der vorgegebene Abstand
zwischen dem Magnetkopf 1 und der Kopfradscheibe 3
wird beim Auflöten des Magnetkopfes auf die
Kopfradscheibe durch entsprechende Abstandsfinger,
die einer Meßeinrichtung zugeordnet sind, gewährleistet.

Die Figur 3 zeigt einen Kernblock 8, der aus den
beiden verbundenen Kernblockhälften 4' und 5' gebildet

4

ist, und von dem die einzelnen verbundenen Kernblockhälften als kompletter Magnetkern 9, z. B. durch Trennschleifen, scheibchenweise abgetrennt werden. In den Kernblock sind Ausnehmungen in Form von Nuten eingebracht, die mit Glaslot ausgefüllt sind. Die Ausnehmungen können eine beliebige Form aufweisen, wichtig ist hierbei nur das eingeschlossene Volumen des Glaslotes. Zur besseren Haftung des Glaslotes an der Kopfradscheibe ist es vorteilhaft, wenigstens die Stellen an denen das Glaslot aus den Ausnehmungen des Magnetkopfes auf die Kopfradscheibe auftrifft, mit einer Haftschicht zu versehen. Die Haftschicht ist vorzugsweise von metallischer Art und kann z. B. galvanisch oder auf andere Art aufgebracht sein.

0256269

1

VERFAHREN ZUR BEFESTIGUNG EINES VIDEO-MAGNETKOPFES


PATENTANSPRÜCHE


1. Verfahren zur Befestigung eines Video-Magnetkopfes auf einer Kopfradscheibe eines Video-Magnetbandgerätes, wobei der Magnetkopf (1) aus zwei verbundenen, einen unmagnetischen Arbeitsspalt aufweisenden Kernhälften (4, 5) mit wenigstens einer um eine Kernhälfte angeordneten Spule (7) besteht, und die beiden Kernhälften von einem vorgeformten Kernblock (8), der aus zwei Kernblockhälften zusammengesetzt ist, abgetrennt sind,
d a d u r c h  g e k e n n z e i c h n e t , daß die verbundenen Kernhälften (4, 5) wenigstens an zwei, vorzugsweise an drei Stellen eine Ausnehmung (2) aufweisen, daß die Ausnehmungen mit schmelzbarem Lot, vorzugsweise Glaslot (2') ausgefüllt sind, und daß der Magnetkopf (1) in einer vorgegebenen Lage auf die Kopfradscheibe (3) mittels Anschmelzen des Lotes aufgelötet ist.


2

2. Verfahren nach Anspruch 1, dadurch gekennzeichnet, daß für das Anschmelzen oder Verflüssigen des Lotes vorzugsweise ein Laserstrahl oder ein Elektronenstrahl verwendet wird.

3. Verfahren nach Anspruch 1, dadurch gekennzeichnet, daß auf die Kopfradscheibe (3) über die dem Magnetkopf zugewandten Fläche, oder vorzugsweise nur im Befestigungsbereich des Magnetkopfes, eine metallische oder keramische Haftschicht durch galvanischen Auftrag oder durch Aufdampfen oder durch Aufsputtern aufgetragen ist.

4. Verfahren nach den Ansprüchen 1 und 2, dadurch gekennzeichnet, daß die Ausnehmungen (2) in den verbundenen Kernhälften im vorgeformten Kernblock (8) eingebracht und mit Glaslot (2') ausgefüllt sind.

1/1

0256269

Fig. 2

Fig. 1

Fig. 3